# EUROPÄISCHE PATENTANMELDUNG

(11) **EP 4 421 362 A1**
(43) Veröffentlichungstag der Anmeldung: **28.08.2024**
(21) Anmeldenummer: 23214458.4
(22) Anmeldetag: 05.12.2023
(51) Int. Cl.: F16K 11/00, E03C 1/04, F16K 31/60, F16K 35/02

(54) **DREHGRIFFKOPPELVORRICHTUNG UND DAMIT AUSGERÜSTETE SANITÄRVENTILVORRICHTUNG**

(30) Priorität: 21.02.2023 DE 102023201514
(71) Anmelder: Hansgrohe SE, 77761 Schiltach (DE)
(72) Erfinder: Armbruster, Stefan, 77756 Hausach (DE); Blattner, Joachim, 77716 Haslach (DE); Brendle, Elvira, 72186 Empfingen (DE); Dold, Florian, 77716 Hofstetten (DE); Kunz, Alexander, 78730 Lauterbach (DE); Lehmann, Günther, 77709 Oberwolfach (DE); Schmider, Jürgen, 77716 Haslach (DE)
(74) Vertreter: Patentanwälte Ruff, Wilhelm, Beier, Dauster & Partner mbB

(57) **Zusammenfassung**

Drehgriffkoppelvorrichtung zur Drehkopplung eines nutzerbedienbaren Drehgriffkörpers mit einer drehverstellbaren Einheit und auf eine damit ausgerüstete Sanitärventilvorrichtung, wobei die Drehgriffkoppelvorrichtung eine wahlweise in eine Entkoppelstellung oder eine Koppelstellung (1b) einstellbare Koppeleinheit (1) beinhaltet, die eine Konusflächenkopplung (2) und/oder ein verformbares Koppelelement (3) aus einem Weichmaterial umfasst, wobei die Koppeleinheit in der Entkoppelstellung eine stufenlose relative Drehverstellung von Drehgriffkörper und drehverstellbarer Einheit freigibt und in der Koppelstellung den Drehgriffkörper mit der drehverstellbaren Einheit drehkoppelt, und eine auf die Koppeleinheit wirkende, nutzereinstellbare Spanneinheit (4), mit der die Koppeleinheit zwischen ihrer Entkoppelstellung und ihrer Koppelstellung verstellbar ist.

## Beschreibung

Die Erfindung bezieht sich auf eine Drehgriffkoppelvorrichtung zur Drehkopplung eines nutzerbedienbaren Drehgriffkörpers mit einer drehverstellbaren Einheit, insbesondere einer drehverstellbaren Ventileinheit eines Sanitärventils, und auf eine Sanitärventilvorrichtung, die ein Sanitärventil mit einer drehverstellbaren Ventileinheit, einen nutzerbedienbaren Drehgriffkörper und eine solche Drehgriffkoppelvorrichtung aufweist.

Drehgriffkoppelvorrichtungen dieser Art werden beispielsweise im Bereich der Sanitärtechnik dafür benutzt, den Drehgriffkörper eines Sanitärventils, der dem Benutzer ein Einstellen bzw. Verstellen des Ventils ermöglichen soll, mit der drehverstellbaren Ventileinheit des Ventils zu koppeln. Dabei dient der Drehgriffkörper als Nutzerschnittstelle für die Steuerung des Ventils durch den Benutzer. Im Bereich der Sanitärtechnik werden derartige Drehgriffkoppelvorrichtungen beispielsweise für Absperr-, Misch- und Umstellventile benutzt. Es versteht sich, dass die vorliegend betrachtete Drehgriffkoppelvorrichtung auch in anderen Technikbereichen nutzbringend einsetzbar ist, in denen es darum geht, dass der Benutzer durch Bedienen eines Drehgriffkörpers eine drehverstellbare Einheit verstellen bzw. einstellen können soll, wobei es sich bei dieser Einheit um ein Ventil außerhalb der Sanitärtechnik handeln kann aber nicht muss. Es kann sich z.B. auch um ein Lenkrad eines Fahrzeugs handeln, das hier stellvertretend für beliebige andere herkömmliche, nutzerbedienbar drehverstellbare Einheiten genannt sei.

Eine häufige Aufgabenstellung besteht bei solchen Drehgriffkoppelvorrichtungen darin, die Drehlage des nutzerbedienbaren Drehgriffkörpers relativ zur drehverstellbaren Einheit in gewünschter Weise festzulegen und bei Bedarf auch verändern zu können. Eine weitere Anforderung besteht bei entsprechenden Anwendungen darin, die Drehgriffkoppelvorrichtung drehmomentbegrenzend auszuführen, worunter vorliegend verstanden wird, dass die Drehgriffkoppelvorrichtung das vom Drehgriffkörper auf die drehverstellbare Einheit übertragbare Drehmoment in vorgebbarer Weise, d.h. auf einen vorgebbaren Maximalwert, begrenzt. Dies soll beispielsweise Beschädigungen der drehverstellbaren Einheit bzw. des zugehörigen Ventils durch zu hohe, vom Benutzer auf den Drehgriffkörper ausgeübte Drehmomente vermeiden.

Die Gebrauchsmusterschrift DE 20 2004 018 747 U1 offenbart für ein z.B. für Druckgasflaschen und Druckgasfässer verwendetes Ventil einen Drehmomentbegrenzer, der die Übertragung eines vom Benutzer über ein Handrad des Ventils ausgeübtes Drehmoment auf einen vorgebbaren Maximalwert begrenzt.

Die Patentschrift DE 10 2016 209 043 B4 offenbart eine Drehgriffkoppelvorrichtung gattungsgemäßer Art, d.h. eine Drehgriffkoppelvorrichtung der eingangs genannten Art bzw. nach dem Oberbegriff des Anspruchs 1, die über einen axialen Fehlmontageanschlag verfügt, der das Aufstecken einer Griffschale auf eine Ventilspindel in einer Fehlmontage-Drehstellung blockiert, um sicherzustellen, dass die Griffschale drehlagerichtig auf die Ventilspindel aufgesetzt wird, bevor sie an dieser drehfest fixiert wird. Dies ist beispielsweise für Thermostatventile nützlich.

Die Patentschrift EP 3 557 104 B1 offenbart eine gattungsgemäße Drehgriffkoppelvorrichtung, die über eine nutzerbetätigbare Ausrichteinheit verfügt, die zwei innerhalb eines begrenzten Ausricht-Winkelbereichs verdrehbare Griffkörperteile drehfest koppelt und bei Betätigung die beiden Griffteile relativ zueinander innerhalb des Ausricht-Winkelbereichs stufenlos verdreht.

Der Erfindung liegt als technisches Problem die Bereitstellung einer Drehgriffkoppelvorrichtung der eingangs genannten Art, die sich zur zuverlässigen und funktionell vorteilhaften Verbindung zweier Bauteile in variablem axialem Abstand zueinander mit relativ geringem Montageaufwand und, bei Demontagebedarf, auch relativ geringem Demontageaufwand eignet, sowie einer damit ausgerüsteten Sanitärventilvorrichtung der eingangs genannten Art zugrunde.

Die Erfindung löst dieses Problem durch die Bereitstellung einer Drehgriffkoppelvorrichtung mit den Merkmalen des Anspruchs 1 und einer Sanitärventilvorrichtung mit den Merkmalen des Anspruchs 11. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Die erfindungsgemäße Drehgriffkoppelvorrichtung beinhaltet eine Koppeleinheit, die wahlweise in eine Entkoppelstellung oder eine Koppelstellung gebracht werden kann und die eine Konusflächenkopplung und/oder ein verformbares Koppelelement aus einem Weichmaterial umfasst, wobei die Koppeleinheit in der Entkoppelstellung eine stufenlose relative Drehverstellung von Drehgriffkörper und drehverstellbarer Einheit freigibt und in der Koppelstellung den Drehgriffkörper mit der drehverstellbaren Einheit drehkoppelt. Weiter beinhaltet die erfindungsgemäße Drehgriffkoppelvorrichtung eine auf die Koppeleinheit wirkende, nutzerbetätigbare Spanneinheit, mit der die Koppeleinheit zwischen ihrer Entkoppelstellung und ihrer Koppelstellung verstellbar ist.

Die dergestalt realisierte Drehgriffkoppelvorrichtung ermöglicht eine funktionssichere, bedienfreundliche und mit relativ geringem Herstellungsaufwand realisierbare, stufenlose Verstellung bzw. Einstellung der Drehlage des Drehgriffkörpers relativ zur drehverstellbaren Einheit. Dazu kann der Benutzer mittels der Spanneinheit die Koppeleinheit in ihre Entkoppelstellung verbringen und dann den Drehgriffkörper stufenlos in die gewünschte Drehlage relativ zur drehverstellbaren Einheit einstellen. Anschließend kann der Benutzer mittels der Spanneinheit die Koppeleinheit in ihre Koppelstellung verstellen und dadurch den Drehgriffkörper in der gewünschten relativen Drehlage mit der drehverstellbaren Einheit drehkoppeln, d.h. bzgl. ihrer Drehbewegung koppeln, z.B. direkt drehfest oder alternativ über ein entsprechendes Koppelgetriebe.

In vorteilhaften Ausführungen umfasst die Koppeleinheit sowohl die Konusflächenkopplung als auch das verformbare Koppelelement aus Weichmaterial. In alternativen Ausführungen kann es je nach Anwendungsfall und Bedarf von Vorteil sein, dass die Koppeleinheit nur die Konusflächenkopplung oder nur das verformbare Koppelelement aufweist.

In einer Weiterbildung der Erfindung ist die Koppeleinheit drehmomentbegrenzend ausgeführt. Diese Realisierung ermöglicht es, das durch die Drehgriffkoppelvorrichtung vom Drehgriffkörper auf die drehverstellbare Einheit übertragene Drehmoment auf einen gewünschten Maximalwert zu begrenzen. Damit lassen sich ggf. Schädigungen an der drehverstellbaren Einheit vermeiden, wenn der Benutzer mit zu hohem Drehmoment auf den Drehgriffkörper einwirkt. Die Drehmomentbegrenzung kann auf irgendeine herkömmliche Art realisiert sein, z.B. durch eine entsprechende Rutschkupplung. In alternativen Ausführungen ist die Koppeleinheit ohne Drehmomentbegrenzung ausgeführt, wenn eine solche für entsprechende Anwendungen nicht benötigt wird.

In einer Weiterbildung der Erfindung umfasst die Konusflächenkopplung eine erste Konusfläche an einer Außenseite einer inneren Koppelhülse und eine mit der ersten Konusfläche zusammenwirkende zweite Konusfläche an einer Innenseite einer äußeren Koppelhülse. Dies stellt eine herstellungstechnisch und funktionell vorteilhafte Realisierung der Koppeleinheit und in diesem Fall speziell von deren Konusflächenkopplung dar. Wenn sich die Koppeleinheit in ihrer Entkoppelstellung befindet, können die beiden zusammenwirkenden Konusflächen frei relativ gegeneinander verdreht werden, indem sie nicht oder nur lose ohne Druck gegeneinander anliegen. Durch die Spanneinheit können die beiden Konusflächen unter Druck gegeneinander zur Anlage gebracht werden, so dass sie drehmomentübertragend miteinander drehgekoppelt sind.

Optional kann das Zusammenwirken der Konusflächen derart realisiert sein, dass damit eine drehmomentbegrenzende Rutschkupplung gebildet ist, die eine Drehmomentübertragung zwischen den beiden Konusflächen und somit durch die Koppeleinheit zwischen Drehgriffkörper und drehverstellbarer Einheit nur bis zu einem bestimmten maximalen Drehmoment bewirkt. Wird vom Benutzer ein zu hohes Drehmoment ausgeübt, rutscht die Kupplung durch, d.h. die beiden Konusflächen beginnen sich relativ zueinander zu verdrehen, so dass das übertragene Drehmoment in gewünschter Weise begrenzt bleibt.

In alternativen Ausführungen kann die Konusflächenkopplung andersartige, zusammenwirkende Konusflächen beinhalten.

In einer Weiterbildung der Erfindung beinhaltet die Koppeleinheit eine Koppelhülse aus einem gummielastischen Material, die eine Koppelhülseninnenseite und eine Koppelhülsenaußenseite als Kopplungsseiten zum drehfesten Koppeln in der Koppelstellung an eine ventilseitige Ankopplungskomponente einerseits und an eine griffseitige Ankopplungskomponente andererseits sowie Koppelhülsenstirnseiten als Kontaktseiten für die Spanneinheit aufweist und die in der Koppelstellung gegenüber der Entkoppelstellung formschlussbildend und/oder kraftschlussbildend verformt ist, z.B. axial verkürzt und radial geweitet, wobei die Spanneinheit axial drückend auf die Koppelhülse einwirkt. Dies stellt eine weitere vorteilhafte Realisierung der Koppeleinheit und hier speziell des verformbaren Koppelelements aus Weichmaterial dar.

Die in diesem Fall als Koppelelement fungierende, gummielastische Koppelhülse kann vom Benutzer über die Spanneinheit gegenüber einer Ausgangsstellung in der Entkoppelstellung der Koppeleinheit so verformt werden, dass sie mit der ventilseitigen Ankopplungskomponente einerseits und der griffseitigen Ankopplungskomponente andererseits einen drehkoppelnden bzw. drehmomentübertragenden Formschluss und/oder Kraftschluss bildet, wodurch sie die Koppeleinheit in die Koppelstellung versetzt. Durch Lösen der Spanneinheit kann der Benutzer die gummielastische Koppelhülse in ihre unverformte Ausgangsstellung zurückbringen, in der sie keine Drehkräfte zwischen den angrenzenden Komponenten, d.h. zwischen der ventilseitigen Ankopplungskomponente einerseits und der griffseitigen Ankopplungskomponente andererseits, überträgt, so dass die Koppeleinheit wieder ihre Entkoppelstellung einnimmt. In dieser Entkoppelstellung kann der Benutzer wiederum eine gewünschte relative Drehlage von Drehgriffkörper und drehverstellbarer Einheit stufenlos einstellen, wobei sich die griffseitige Ankopplungskomponente und die ventilseitige Ankopplungskomponente entsprechend stufenlos relativ zueinander verdrehen lassen. In alternativen Ausführungen kann das verformbare Koppelelement statt als Koppelhülse als ein anders gestaltetes Element realisiert sein.

In einer Ausgestaltung der Erfindung ist an der Koppelhülseninnenseite ein Drehkoppelprofil ausgebildet, das zum drehfesten Koppeln mit einem Gegenprofil der ventilseitigen Ankopplungskomponente eingerichtet ist. Mit dieser Maßnahme lässt sich die Koppelhülse drehfest an der ventilseitigen Ankopplungskomponente festlegen. Die Koppelstellung und die Entkoppelstellung sind in diesem Fall dadurch realisiert, dass die Koppelhülse in der Koppelstellung mit ihrer Koppelhülsenaußenseite gegen die griffseitige Ankopplungskomponente drehmomentübertragend angelegt bzw. angedrückt wird, während sie in der Entkoppelstellung mit ihrer Koppelhülsenaußenseite von der griffseitigen Ankopplungskomponente gelöst bzw. nicht mehr gegen diese angedrückt wird. In alternativen Ausführungen ist die Koppelhülse bleibend drehfest mit der griffseitigen Ankopplungskomponente verbunden oder in der Entkoppelstellung der Koppeleinheit weder mit der ventilseitigen Ankoppelungskomponente noch mit der griffseitigen Ankopplungskomponente drehmomentübertragend verbunden.

In einer Ausgestaltung der Erfindung beinhaltet die Spanneinheit eine drehfest mit der drehverstellbaren Einheit koppelbare Abstützhülse zur axialen Abstützung der Koppelhülse an einer ihrer beiden Koppelhülsenstirnseiten und einen Spannbolzen zur axialen Spanndruckerzeugung auf die andere der beiden Koppelhülsenstirnseiten Dies stellt eine funktionell und herstellungstechnisch vorteilhafte Realisierung der Spanneinheit dar. Der Spannbolzen kann z.B. als Schraubbolzen ausgeführt sein, der an oder in die drehverstellbare Einheit oder eine andere, benachbarte Komponente z.B. eines Ventils geschraubt werden kann, um die Koppelhülse axial zusammenzudrücken und dadurch kraftschlussbildend radial zu weiten und/oder axial in ein angrenzendes Formschlussprofil zu drücken. In alternativen Ausführungen kann die Spanneinheit von einer anderen, herkömmlichen Bauform sein, z.B. als Spannzangeneinheit oder dergleichen.

In einer Ausgestaltung der Erfindung beinhaltet die Drehgriffkoppelvorrichtung eine die griffseitige Ankopplungskomponente bildende Drehhülse, die innenseitig eine Anlagefläche aufweist, gegen welche die Koppelhülse mit ihrer Koppelhülsenaußenseite drehmomentübertragend anliegt, wenn sich die Koppeleinheit in ihrer Koppelstellung befindet. Dies stellt eine vorteilhafte Ausführung der griffseitigen Ankopplungskomponente dar, mit der die gummielastische Koppelhülse form- und/oder kraftschlussbildend zusammenwirken kann. In alternativen Ausführungen ist die griffseitige Ankopplungskomponente nicht als Hülse gestaltet, sondern besitzt eine andere Form.

In einer weiteren Ausgestaltung der Erfindung bildet die gummielastische Koppelhülse die innere Koppelhülse der Konusflächenkopplung, wobei die Koppelhülsenaußenseite die erste Konusfläche aufweist, und die Drehhülse bildet die äußere Koppelhülse der Konusflächenkopplung, wobei die Anlagefläche der Drehhülse die zweite Konusfläche aufweist. In dieser Ausführung beinhaltet die Koppeleinheit der Drehgriffkoppelvorrichtung sowohl die Konusflächenkopplung als auch das verformbare Koppelelement aus Weichmaterial, jeweils in einer spezifisch vorteilhaften Ausführung. Die gummielastische Koppelhülse fungiert gleichzeitig als eine der Koppelhülsen der Konusflächenkopplung und als verformbares Koppelelement aus Weichmaterial. Dies ermöglicht die Bereitstellung der Koppeleinheit mit relativ wenigen, einfach aufgebauten Komponenten bei hoher Funktionssicherheit der Koppeleinheit.

In einer Ausgestaltung der Erfindung weist die Drehhülse eine stirnseitige Anlagefläche für den Spannbolzen und eine innenseitige Ringschulter auf, gegen welche die Koppelhülse mit ihrer spannbolzenseitigen Koppelhülsenstirnseite zur Anlage kommt. Diese Maßnahme hat den Vorteil, dass die Drehhülse zusätzlich zu ihrer Funktion als griffseitige Ankopplungskomponente als Bestandteil der Spanneinheit fungieren kann, indem sie vom Spannbolzen gegen die gummielastische Koppelhülse gedrückt werden kann, um die gummielastische Koppelhülse in ihre kraft- und/oder formschlussbildende Lage und damit die Koppeleinheit in die Koppelstellung zu bringen. In alternativen Ausführungen kann z.B. der Spannbolzen selbst als Andrückelement gegen die gummielastische Koppelhülse ohne Zwischenschaltung der Drehhülse fungieren.

In einer Ausgestaltung der Erfindung weisen die Drehhülse und die Abstützhülse zentrierend zusammenwirkende Konusbereiche auf. Diese Maßnahme erleichtert ein sicheres, zentriertes Anbringen der Drehhülse, wozu die Abstützhülse zusätzlich zu ihrer Abstützfunktion für die Koppelhülse die Zentrierfunktion für die Drehhülse bereitstellt. In alternativen Ausführungen kann die Zentrierfunktion für die Drehhülse entfallen, wenn hierfür kein Bedarf besteht, oder die Zentrierfunktion wird von einer weiteren Komponente zusätzlich zur Abstützhülse bereitgestellt.

Die erfindungsgemäße Sanitärventilvorrichtung weist die erfindungsgemäße Drehgriffkoppelvorrichtung auf, durch welche die drehverstellbare Ventileinheit des Sanitärventils mit dem nutzerbedienbaren Drehgriffkörper drehgekoppelt wird. Folglich ergeben sich für die Betätigung des Sanitärventils die bereits erwähnten Vorteile der Nutzung der erfindungsgemäßen Drehgriffkoppelvorrichtung. Insbesondere ermöglicht dies eine stufenlose Einstellung der relativen Drehlage des nutzerbedienbaren Drehgriffkörpers gegenüber der drehverstellbaren Ventileinheit mit geringem Aufwand.

In einer Weiterbildung der Erfindung weist die Sanitärventilvorrichtung ein zweites Sanitärventil mit einer zweiten drehverstellbaren Ventileinheit und einer zweiten erfindungsgemäßen Drehgriffkoppelvorrichtung zur Drehkopplung der zweiten drehverstellbaren Ventileinheit mit dem nutzerbedienbaren Drehgriffkörper auf.

In dieser vorteilhaften Ausführung beinhaltet die Sanitärventilvorrichtung folglich zwei Sanitärventile, deren drehverstellbare Ventileinheiten vom Benutzer über den gleichen, gemeinsamen Drehgriffkörper eingestellt werden können. Durch die Verwendung der erfindungsgemäßen Drehgriffkoppelvorrichtungen können die beiden drehverstellbaren Ventileinheiten in ihrer Drehlage relativ relativ zueinander stufenlos verstellt werden, wenn sich die betreffenden Koppeleinheiten der Drehgriffkoppelvorrichtung in ihrer Entkoppelstellung befinden. Gleichzeitig lässt sich dadurch die relative Drehlage des gemeinsamen Drehgriffkörpers zu den drehverstellbaren Ventileinheiten in einer gewünschten Weise einstellen bzw. festlegen. Nach dem Verbringen der Koppeleinheit in die Koppelstellung lassen sich dann die beiden Ventileinheiten und damit die betreffenden Sanitärventile vom Benutzer durch Drehen am gemeinsamen Drehgriffkörper wie gewünscht steuern bzw. einstellen.

Beispielsweise kann es sich bei den beiden Sanitärventilen um ein Absperrventil für Warmwasser und ein Absperrventil für Kaltwasser handeln, die unter Bildung einer Thermostatventilfunktion gegensätzlich geöffnet und geschlossen werden, um Mischwasser mit variabel einstellbarer Temperatur bereitzustellen. In diesem Fall sollte sich beispielsweise das eine Ventil im maximal geöffneten Zustand befinden, wenn sich das andere Ventil im maximal geschlossenen Zustand befindet und umgekehrt. Die erfindungsgemäßen Drehgriffkoppelvorrichtungen ermöglichen in sehr einfacher Weise die definierte Einstellung dieser Drehlagen für die beiden Ventileinheiten relativ zueinander sowie relativ zum Drehgriffkörper.

In einer Ausgestaltung der Erfindung sind die erste und die zweite drehverstellbare Ventileinheit mit parallelen Drehachsen angeordnet, und die erste und/oder die zweite drehverstellbare Ventileinheit ist über ein Getriebe mit dem nutzerbedienbaren Drehgriffkörper gekoppelt. Diese Maßnahme ist speziell für Anwendungen von Vorteil, bei denen die Ankopplung mindestens einer der beiden Ventileinheiten an den Drehgriffkörper nicht als direkte drehfeste Kopplung gewünscht ist, sondern über ein zwischengeschaltetes Getriebe. Das Getriebe kann dabei je nach Bedarf und Anwendungsfall für eine gewünschte Untersetzung oder Übersetzung zwischen der Drehbewegung des Drehgriffkörpers einerseits und der Drehbewegung der betreffenden drehverstellbaren Ventileinheit andererseits sorgen. Das Getriebe kann auch aus räumlichen Anordnungsgründen zwischengeschaltet sein, um zwischen der räumlichen Positionierung des Drehgriffkörpers einerseits und der räumlichen Positionierung der betreffenden drehverstellbaren Ventileinheit andererseits zu vermitteln. In diesem Fall kann es sich z.B. auch um ein Getriebe mit einer 1 :1-Übersetzung handeln.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine Seitenansicht eines Sanitärventils mit montierter, erfindungsgemäßer Drehgriffkoppelvorrichtung mit ihrer Koppeleinheit in Koppelstellung,
- Fig. 2: eine Schnittansicht längs einer Linie II-II in Fig. 1,
- Fig. 3: eine Seitenansicht einer gummielastischen Koppelhülse der Drehgriffkoppelvorrichtung,
- Fig. 4: eine Schnittansicht längs einer Linie IV-IV in Fig. 3,
- Fig. 5: eine Draufsicht auf die gummielastischen Koppelhülse,
- Fig. 6: eine Seitenansicht einer Abstützhülse der Drehgriffkoppelvorrichtung,
- Fig. 7: eine Schnittansicht längs einer Linie VII-VII in Fig. 6,
- Fig. 8: eine Draufsicht auf die Abstützhülse,
- Fig. 9: eine Seitenansicht einer Drehhülse der Drehgriffkoppelvorrichtung,
- Fig. 10: eine Schnittansicht längs einer Linie X-X in Fig. 9,

- Fig. 11: eine Seitenansicht eines Spannbolzens der Drehgriffkoppelvorrichtung,
- Fig. 12: eine Draufsicht auf den Spannbolzen,
- Fig. 13: eine Schnittansicht der Drehgriffkoppelvorrichtung mit ihrer Koppeleinheit in Entkoppelstellung und
- Fig. 14: eine perspektivische Explosionsansicht einer Sanitärventilvorrichtung mit zwei Ventilen und zugeordneten, erfindungsgemäßen Drehgriffkoppelvorrichtungen.

Die in den Figuren veranschaulichte Drehgriffkoppelvorrichtung dient allgemein zur Drehkopplung eines nutzerbedienbaren Drehgriffkörpers mit einer drehverstellbaren Einheit, wobei es sich im gezeigten Fall exemplarisch um eine drehverstellbare Ventileinheit eines Sanitärventils handelt.

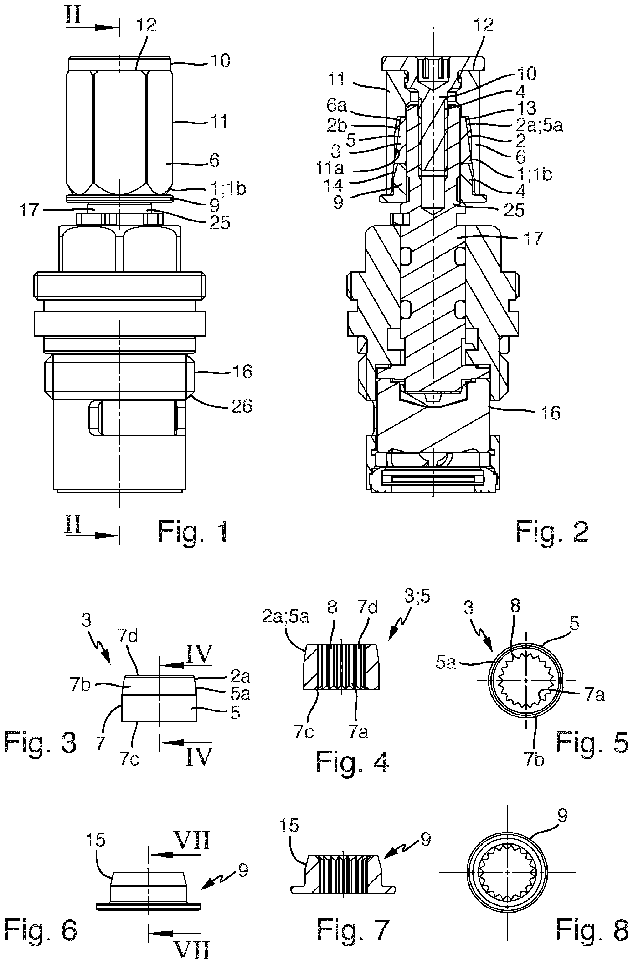

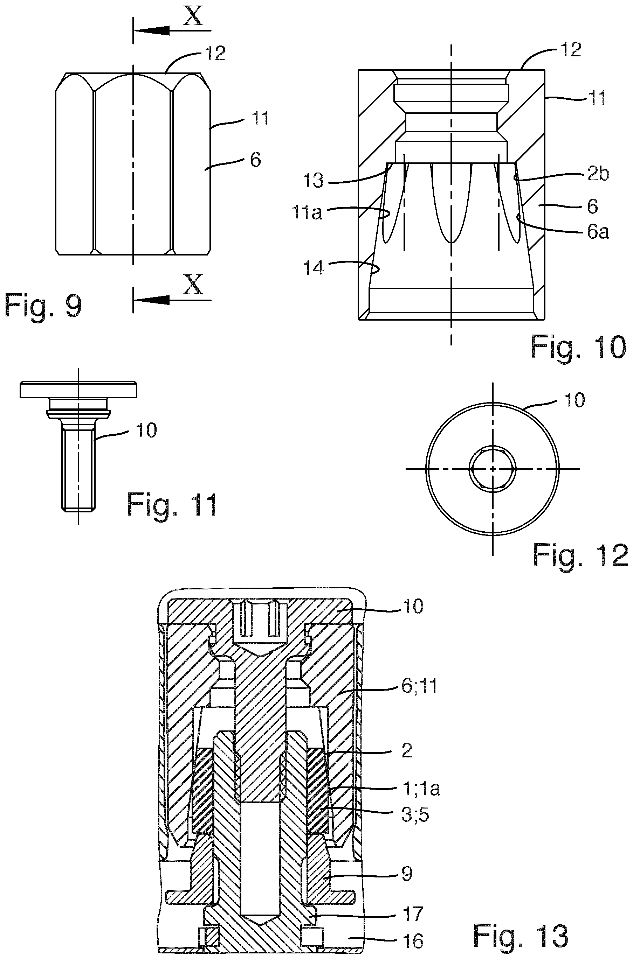

Die Drehgriffkoppelvorrichtung umfasst eine Koppeleinheit 1, die von einem Benutzer wahlweise in eine Entkoppelstellung 1a, wie z.B. in Fig. 13 gezeigt, oder eine Koppelstellung 1b, wie z.B. in Fig. 2 gezeigt, eingestellt werden kann. Die Koppeleinheit 1 beinhaltet eine Konusflächenkopplung 2 und/oder ein verformbares Koppelelement 3 aus einem Weichmaterial, wobei sie im gezeigten Beispiel sowohl die Konusflächenkopplung 2 als auch das verformbare Koppelelement 3 aus Weichmaterial aufweist. In der Entkoppelstellung 1a gibt die Koppeleinheit 1 eine stufenlose relative Drehverstellung von Drehgriffkörper und drehverstellbarer Einheit frei, während in der Koppelstellung 1b die Koppeleinheit 1 den Drehgriffkörper mit der drehverstellbaren Einheit drehkoppelt, d.h. direkt drehfest oder über ein oder mehrere zwischengeschaltete Elemente bezüglich einer Drehbewegung verkoppelt.

Des Weiteren beinhaltet die Drehgriffkoppelvorrichtung eine auf die Koppeleinheit 1 wirkende Spanneinheit 4, die vom Benutzer betätigbar ist und mit der die Koppeleinheit 1 zwischen ihrer Entkoppelstellung 1a und ihrer Koppelstellung 1b verstellbar ist.

In vorteilhaften Ausführungen ist die Koppeleinheit 1, wie im gezeigten Beispiel, drehmomentbegrenzend ausgeführt, d.h. das von ihr übertragene Drehmoment ist auf einen vorgebbaren Maximalwert begrenzt. Entsprechende Drehmomentbegrenzungsvorrichtungen, mit denen die Koppeleinheit 1 hierzu versehen sein kann, sind an sich bekannt und bedürfen daher hier keiner näheren Erläuterung, soweit es sich nicht um spezifische, nachstehend erläuterte Realisierungen handelt.

In entsprechenden Realisierungen umfasst die Konusflächenkopplung 2, wie im gezeigten Beispiel, eine erste Konusfläche 2a an einer Außenseite 5a einer inneren Koppelhülse 5 und eine mit der ersten Konusfläche 2a drehmomentübertragungskoppelnd zusammenwirkende zweite Konusfläche 2b an einer Innenseite 6a einer äußeren Koppelhülse 6.

In einer vorteilhaften Ausführungsform beinhaltet die Koppeleinheit 1, wie im gezeigten Beispiel, eine Koppelhülse 7 aus einem gummielastischen Material als das verformbare Koppelelement 3, wobei die Koppelhülse 7 eine Koppelhülseninnenseite 7a und eine Koppelhülsenaußenseite 7b als Kopplungsseiten zum drehfesten Koppeln in der Koppelstellung 1b an eine ventilseitige Ankopplungskomponente einerseits und an eine griffseitige Ankopplungskomponente andererseits aufweist. Zudem beinhaltet die Koppelhülse 7 Koppelhülsenstirnseiten 7c, 7d als Kontaktseiten für die Spanneinheit 2. Die Koppelhülse 7 ist in der Koppelstellung 1b der Koppeleinheit 1 gegenüber der Entkoppelstellung 1a formschlussbildend und/oder kraftschlussbildend verformt, wobei die Spanneinheit 2 axial drückend auf die Koppelhülse 7 einwirkt.

In einer entsprechenden Realisierung ist, wie im gezeigten Beispiel, an der Innenseite 7a der Koppelhülse 7 ein Drehkoppelprofil 8 ausgebildet, das zum drehfesten Koppeln mit einem Gegenprofil der ventilseitigen Ankopplungskomponente eingerichtet ist.

Im gezeigten Ausführungsbeispiel ist die ventilseitige Ankopplungskomponente von einer Ventilspindel 25 gebildet, die in diesem Beispiel als Koppelschnittstelle der drehverstellbaren Ventileinheit fungiert.

In entsprechenden Realisierungen beinhaltet die Spanneinheit 2, wie im gezeigten Beispiel, eine drehfest mit der drehverstellbaren Einheit koppelbare Abstützhülse 9 zur axialen Abstützung der Koppelhülse 7 an einer ihrer beiden Koppelhülsenstirnseiten 7c, 7d, im gezeigten Beispiel an der Koppelhülsenstirnseite 7c, und einen Spannbolzen 10 zur axialen Spanndruckerzeugung auf die andere Koppelhülsenstirnseite, im gezeigten Beispiel die Koppelhülsenstirnseite 7d, bzw. auf die Koppelhülse 7 insgesamt.

In vorteilhaften Ausführungsformen beinhaltet die Drehgriffkoppelvorrichtung, wie beim gezeigten Beispiel, eine die griffseitige Ankopplungskomponente bildende Drehhülse 11, die innenseitig eine Anlagefläche 11a aufweist, gegen welche die Koppelhülse 7 mit ihrer Koppelhülsenaußenseite 7b drehmomentübertragend anliegt bzw. andrückt, wenn sich die Koppeleinheit 1 in ihrer Koppelstellung 1b befindet. Optional ist durch dieses Zusammenwirken der Drehhülsenanlagefläche 11a und der Koppelhülsenaußenseite 7b eine drehmomentbegrenzende Rutschkupplung gebildet.

In einer vorteilhaften Ausführung bildet die gummielastische Koppelhülse 7, wie im gezeigten Beispiel, gleichzeitig die innere Koppelhülse 5 der Konusflächenkopplung 2, wobei die Außenseite 7b der Koppelhülse 7 die erste Konusfläche 2a aufweist, während die Drehhülse 11 die äußere Koppelhülse 6 der Konusflächenkopplung 2 bildet, wobei die Anlagefläche 11a der Drehhülse 11 die zweite Konusfläche 2b aufweist.

In einer entsprechenden Realisierung weist die Drehhülse 11, wie im gezeigten Beispiel, eine stirnseitige Anlagefläche 12 für den Spannbolzen 10 und eine innenseitige Ringschulter 13 auf, gegen welche die Koppelhülse 7 mit ihrer spannbolzenseitigen Koppelhülsenstirnseite 7d zur Anlage kommen kann, falls sie so weit in die Drehhülse 11 hineingedrückt wird.

In einer entsprechenden Ausführung weisen die Drehhülse 7 und die Abstützhülse 5, wie im gezeigten Beispiel, zentrierend zusammenwirkende Konusbereiche 14, 15 auf.

Die Fig. 1, 2 und 14 veranschaulichen eine Ventilvorrichtung, bei der es sich vorzugsweise um eine Sanitärventilvorrichtung handelt und die ein Ventil 16, vorzugsweise ein Sanitärventil, mit einer drehverstellbaren Ventileinheit 17, einen nutzerbedienbaren Drehgriffkörper 18 und eine Drehgriffkoppelvorrichtung 19 in erfindungsgemäßer Ausführung umfasst, wobei die Drehgriffkoppelvorrichtung 19 zur Drehkopplung der drehverstellbaren Ventileinheit 17 mit dem nutzerbedienbaren Drehgriffkörper 18 eingerichtet ist. Die drehverstellbare Ventileinheit 17 beinhaltet beim gezeigten Beispiel an einem Ende die Ventilspindel 25, während an ihr anderes Ende in herkömmlicher, hier nicht weiter interessierender Weise ein beweglicher Ventilschließkörper angekoppelt ist. Diese Ventilkomponenten sind in einer ebenfalls an sich bekannten Ventilkartusche 26 untergebracht.

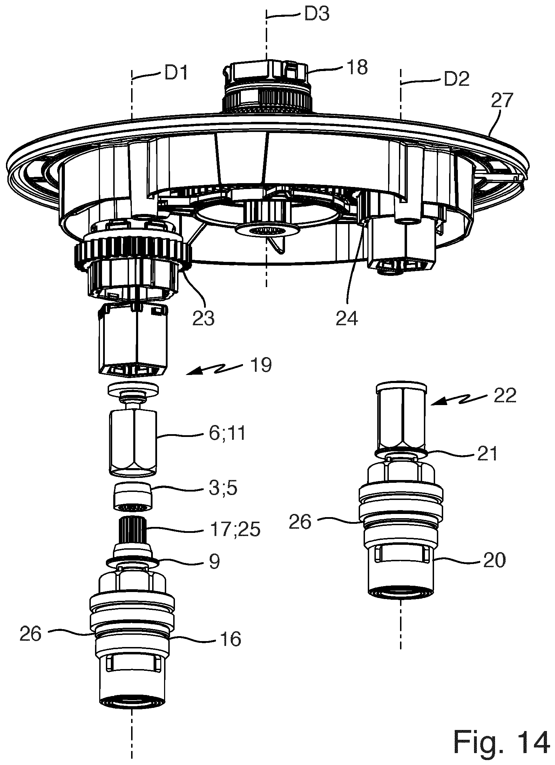

Fig. 14 veranschaulicht eine erfindungsgemäße Ventilvorrichtung, vorzugsweise Sanitärventilvorrichtung, die zusätzlich zu dem bereits erwähnten Ventil 16 ein zweites Ventil 20, vorzugsweise eine Sanitärventil, mit einer zweiten drehverstellbaren Ventileinheit 21 und einer zweiten erfindungsgemäßen Drehgriffkoppelvorrichtung 22 beinhaltet. Dabei ist die zweite Drehgriffkoppelvorrichtung 22 zur Drehkopplung der zweiten drehverstellbaren Ventileinheit 21 mit dem gleichen, gemeinsamen Drehgriffkörper 18 eingerichtet.

In vorteilhaften Ausführungen der Sanitärventilvorrichtung sind, wie im gezeigten Beispiel, die erste und die zweite drehverstellbare Ventileinheit 17, 21 mit parallelen Drehachsen D1, D2 angeordnet, wobei die erste und/oder die zweite drehverstellbare Ventileinheit 17, 21 über ein Getriebe mit dem nutzerbedienbaren Drehgriffkörper 18 gekoppelt ist. Im gezeigten Beispiel der Fig. 14 sind beide drehverstellbaren Ventileinheiten 17, 18 über je ein Getriebe 23, 24 mit dem Drehgriffkörper 18 gekoppelt.

Auf diese Weise können beide Ventileinheiten 17, 18 über den gemeinsamen Drehgriffkörper 18 vom Benutzer gleichzeitig bzw. synchron bedient, d.h. betätigt werden. Mit anderen Worten können die beiden Ventile 16, 20 mittels der beiden Drehgriffkoppelvorrichtungen 19, 22 gemeinsam, synchron vom Benutzer bedient, d.h. betätigt, werden. Über das jeweilige Getriebe 23, 24 kann die Übersetzung und der Drehsinn für die Ventileinheiten 17, 21 in Bezug auf den Drehgriffkörper 18 in gewünschter Weise festgelegt werden. Um die Drehlage des jeweiligen Ventils 16, 20, d.h. seiner drehbeweglichen Ventileinheit 17, 21, in definierter Weise gegenüber der Drehlage des Drehgriffkörpers 18 festzulegen, wird die jeweilige Drehgriffkoppelvorrichtung 19, 22 mit ihrer Koppeleinheit 1 in ihre jeweilige Entkoppelstellung 1a verbracht. Dann kann die besagte relative Drehlage stufenlos verstellt bzw. eingestellt werden. Dabei lässt sich gleichzeitig auch die relative Drehlage zwischen den beiden Ventilen 16, 20 bzw. deren drehbeweglichen Ventileinheiten 17, 21 in gewünschter Weise einstellen. Anschließend werden die Drehgriffkoppelvorrichtungen mit ihrer Koppeleinheit in die Koppelstellung 1b verbracht, wodurch der Drehgriffkörper 18 mit den beiden drehbeweglichen Ventileinheiten 17, 21 der beiden Ventile 16, 20 drehgekoppelt ist. Dies ermöglicht folglich in einfacher und komfortabler Weise eine Synchronisierung der beiden Ventile 16, 20 bzw. ihrer drehbeweglichen Ventileinheiten 17, 21 hinsichtlich ihrer Drehlagen relativ zueinander und relativ zum Drehgriffkörper. Je nach Bedarf und Anwendungsfall kann dies beispielsweise dafür genutzt werden, über den Drehgriffkörper 18 das eine Ventil zu öffnen und synchron dazu das andere Ventil zu schließen oder alternativ beide Ventile synchron zu öffnen oder synchron zu schließen.

Im Ausführungsbeispiel von Fig. 14 sind die beiden Ventile 16, 20 mit außermittigen Drehachsen D1, D2 an einer gemeinsamen Halterung 27 gehalten, an der zentrisch mit mittiger Drehachse D3 der gemeinsame nutzerbedienbare Drehgriffkörper 18 gehalten ist. Bei der Halterung 27 kann es sich beispielsweise auch um eine Komponente eines Funktionsblocks zum Einbau in eine sanitäre Installationsanschlussbox handeln, die in eine gebäudeseitige Wand z.B. eines Duschraums oder Badezimmers eingebaut ist, um Sanitärkomponenten, wie Wasserauslaufarmaturen etc., unter Verwendung des bzw. der Ventile 16, 20 an eine gebäudeseitige Kalt- und/oder Warmwasserzuleitung anzuschließen.

Wie die gezeigten und die weiteren oben erläuterten Ausführungsbeispiele deutlich machen, stellt die Erfindung eine vorteilhafte Drehgriffkoppelvorrichtung zur Verfügung, mittels der ein nutzerbedienbarer Drehgriffkörper mit einer drehverstellbaren Einheit drehgekoppelt werden kann, wobei die relative Drehlage zwischen dem Drehgriffkörper und der drehverstellbaren Einheit stufenlos einstellbar ist.

Weiter stellt die Erfindung in vorteilhafter Weise eine Sanitärventilvorrichtung mit einem oder mehreren Ventilen zur Verfügung, denen jeweils eine derartige Drehgriffkoppelvorrichtung zugeordnet ist. Hierbei können auf Wunsch mehrere Ventile an einen gemeinsamen nutzerbedienbaren Drehgriffkörper angekoppelt sein, wobei sich die relative Drehlage ihrer drehverstellbaren Ventileinheiten ebenso stufenlos einstellen bzw. synchronisieren lässt wie die relative Drehlage zwischen dem jeweiligen Ventil und dem nutzerbedienbaren Drehgriffkörper.

## Patentansprüche

1. Drehgriffkoppelvorrichtung zur Drehkopplung eines nutzerbedienbaren Drehgriffkörpers mit einer drehverstellbaren Einheit, insbesondere einer drehverstellbaren Ventileinheit eines Sanitärventils,
**gekennzeichnet durch**
- eine wahlweise in eine Entkoppelstellung (1a) oder eine Koppelstellung (1b) einstellbare Koppeleinheit (1), die eine Konusflächenkopplung (2) und/oder ein verformbares Koppelelement (3) aus einem Weichmaterial umfasst, wobei die Koppeleinheit (1) in der Entkoppelstellung (1a) eine stufenlose relative Drehverstellung von Drehgriffkörper und drehverstellbarer Einheit freigibt und in der Koppelstellung (1b) den Drehgriffkörper mit der drehverstellbaren Einheit drehkoppelt, und
- eine auf die Koppeleinheit (1) wirkende, nutzerbetätigbare Spanneinheit (4), mit der die Koppeleinheit (1) zwischen ihrer Entkoppelstellung (1a) und ihrer Koppelstellung (1b) verstellbar ist.

2. Drehgriffkoppelvorrichtung nach Anspruch 1, weiter **dadurch gekennzeichnet, dass** die Koppeleinheit (1) drehmomentbegrenzend ausgeführt ist.

3. Drehgriffkoppelvorrichtung nach Anspruch 1 oder 2, weiter **dadurch gekennzeichnet, dass** die Konusflächenkopplung (2) eine erste Konusfläche (2a) an einer Außenseite (5a) einer inneren Koppelhülse (5) und eine mit der ersten Konusfläche (2a) drehmomentübertragungskoppelnd zusammenwirkende zweite Konusfläche (2b) an einer Innenseite (6a) einer äußeren Koppelhülse (6) umfasst.

4. Drehgriffkoppelvorrichtung nach einem der Ansprüche 1 bis 3, weiter **dadurch gekennzeichnet, dass** die Koppeleinheit (1) eine Koppelhülse (7) aus einem gummielastischen Material als das verformbare Koppelelement (3) beinhaltet, wobei die Koppelhülse (7) eine Koppelhülseninnenseite (7a) und eine Koppelhülsenaußenseite (7b) als Kopplungsseiten zum drehfesten Koppeln in der Koppelstellung (1b) an eine ventilseitige Ankopplungskomponente einerseits und an eine griffseitige Ankopplungskomponente andererseits sowie Koppelhülsenstirnseiten (7c, 7d) als Kontaktseiten für die Spanneinheit (2) aufweist und die in der Koppelstellung (1b) gegenüber der Entkoppelstellung (1a) formschlussbildend und/oder kraftschlussbildend verformt ist, wobei die Spanneinheit (2) axial drückend auf die Koppelhülse (7) einwirkt.

5. Drehgriffkoppelvorrichtung nach Anspruch 4, weiter **dadurch gekennzeichnet, dass** an der Koppelhülseninnenseite (7a) ein Drehkoppelprofil (8) ausgebildet ist, das zum drehfesten Koppeln mit einem Gegenprofil der ventilseitigen Ankopplungskomponente eingerichtet ist.

6. Drehgriffkoppelvorrichtung nach Anspruch 4 oder 5, weiter **dadurch gekennzeichnet, dass** die Spanneinheit (2) eine drehfest mit der drehverstellbaren Einheit koppelbare Abstützhülse (9) zur axialen Abstützung der Koppelhülse (7) an einer (7c) ihrer beiden Koppelhülsenstirnseiten (7c, 7d) und einen Spannbolzen (10) zur axialen Spanndruckerzeugung auf die Koppelhülse (7) beinhaltet.

7. Drehgriffkoppelvorrichtung nach einem der Ansprüche 4 bis 6, weiter **gekennzeichnet durch** eine die griffseitige Ankopplungskomponente bildende Drehhülse (11), die innenseitig eine Anlagefläche (11a) aufweist, gegen welche die Koppelhülse (7) mit ihrer Koppelhülsenaußenseite (7b) drehmomentübertragend anliegt, wenn sich die Koppeleinheit (1) in ihrer Koppelstellung (1b) befindet.

8. Drehgriffkoppelvorrichtung nach Anspruch 7, weiter **dadurch gekennzeichnet, dass** die gummielastische Koppelhülse (7) die innere Koppelhülse (5) der Konusflächenkopplung (2) bildet, wobei die Koppelhülsenaußenseite (7b) die erste Konusfläche (2a) aufweist, und die Drehhülse (11) die äußere Koppelhülse (6) der Konusflächenkopplung (2) bildet, wobei die Anlagefläche (11a) der Drehhülse (11) die zweite Konusfläche (2b) aufweist.

9. Drehgriffkoppelvorrichtung nach Anspruch 7 oder 8, weiter **dadurch gekennzeichnet, dass** die Drehhülse (7) eine stirnseitige Anlagefläche (12) für den Spannbolzen (2b) und eine innenseitige Ringschulter (13) aufweist, gegen welche die Koppelhülse (7) mit ihrer spannbolzenseitigen Koppelhülsenstirnseite (7d) anlegbar ist.

10. Drehgriffkoppelvorrichtung nach einem der Ansprüche 7 bis 9, weiter **dadurch gekennzeichnet, dass** die Drehhülse (7) und die Abstützhülse (9) zentrierend zusammenwirkende Konusbereiche (14, 15) aufweisen.

11. Sanitärventilvorrichtung mit
- einem Sanitärventil (16) mit einer drehverstellbaren Ventileinheit (17),
- einem nutzerbedienbaren Drehgriffkörper (18) und
- einer Drehgriffkoppelvorrichtung (19) zur Drehkopplung der drehverstellbaren Ventileinheit (17) mit dem nutzerbedienbaren Drehgriffkörper (18),
**dadurch gekennzeichnet, dass**
- die Drehgriffkoppelvorrichtung (19) eine solche nach einem der Ansprüche 1 bis 10 ist.

12. Sanitärventilvorrichtung nach Anspruch 11, weiter **gekennzeichnet durch** ein zweites Sanitärventil (20) mit einer zweiten drehverstellbaren Ventileinheit (21) und einer zweiten Drehgriffkoppelvorrichtung (22) nach einem der Ansprüche 1 bis 10 zur Drehkopplung der zweiten drehverstellbaren Ventileinheit (21) mit dem nutzerbedienbaren Drehgriffkörper (18).

13. Sanitärventilvorrichtung nach Anspruch 12, weiter **dadurch gekennzeichnet, dass** die erste und die zweite drehverstellbare Ventileinheit (17, 21) mit parallelen Drehachsen angeordnet sind und die erste und/oder die zweite drehverstellbare Ventileinheit (17, 21) über ein Getriebe (23, 24) mit dem nutzerbedienbaren Drehgriffkörper (18) gekoppelt ist.
